# EUROPÄISCHE PATENTSCHRIFT

(11) **EP 0 773 147 B1**
(45) Veröffentlichungstag und Bekanntmachung des Hinweises auf die Patenterteilung: **10.07.2002**
(21) Anmeldenummer: 96117524.7
(22) Anmeldetag: 31.10.1996
(51) Int. Cl.: B60R 22/34, B60R 22/28, B60R 22/46

(54) **Gurtaufroller für einen Fahrzeug-Sicherheitsgurt**
Seatbelt retractor for a vehicle
Rétracteur de ceinture de sécurité pour véhicule

(30) Priorität: 09.11.1995 DE 19541834; 26.07.1996 DE 29613044 U
(43) Veröffentlichungstag der Anmeldung: 14.05.1997
(73) Patentinhaber: TRW Occupant Restraint Systems GmbH & Co. KG, 73551 Alfdorf (DE)
(72) Erfinder: Hirzel, Uwe, 71549 Auenwald (DE); Frei, Bernhard, 73550 Waldstetten (DE); Kinzel, Albert, 5342 Abersee (AT)
(74) Vertreter: Degwert, Hartmut, Dipl.-Phys.

(56) Entgegenhaltungen:
- EP-A- 0 627 345
- EP-A- 0 709 266
- DE-A- 2 026 277
- US-A- 4 322 046

## Beschreibung

Die Erfindung betrifft einen Gurtaufroller für einen Fahrzeug-Sicherheitsgurt.

Die bei blockierter Gurtspule auf einen angegurteten Fahrzeuginsassen einwirkenden Gurtkräfte können bei einem schweren Fahrzeugunfall so groß werden, daß sie zu einer Verletzung des Fahrzeuginsassen führen. Daher wird angestrebt, die maximal in dem Gurtband wirkenden Kräft zu begrenzen. Dafür gibt es verschiedene Ansätze. Meistens werden Kraftbegrenzungsvorrichtungen verwendet, die bei hoher Belastung durch eine elastische und/oder plastische Verformung eine Verlängerung oder ein Nachgeben des Gurtbandes oder auch des gesamten Gurtaufrollers ermöglichen, wodurch aufgrund der resultierenden Vorwärtsverlagerung des Fahrzeuginsassen ein zusätzlicher Weg für die Verzögerung des Fahrzeuginsassen bereitgestellt wird. Daraus ergibt sich eine Begrenzung der Kraft auf den Fahrzeuginsasssen. Diese Kraftbegrenzungsvorrichtungen sind im allgemeinen von dem Gurtaufroller getrennte Bauelemente, die hinsichtlich des zu ihrer Anbringung notwendigen Einbauraumes unbefriedigend sind.

Aus der US-A-4,322,046 ist ein Gurtaufroller bekannt, der eine hohle Gurtspule aufweist. Im Innenraum der Gurtspule ist ein Torsionsstab angeordnet, der an einem axialen Ende drehfest mit der Gurtspule verbunden ist. Am anderen axialen Ende des Torsionsstabes ist eine mit einer Sperrverzahnung versehene Sperrscheibe vorgesehen, die drehfest mit dem Torsionsstab verbunden ist. Weiterhin ist eine Sperrklinke vorgesehen, die von einem fahrzeugsensitiven Sensor betätigt werden kann. Wenn die Sperrklinke in die Sperrverzahnung eingesteuert ist, ist das der Sperrscheibe zugeordnete Ende des Torsionsstabes drehfest gehalten. Das Abziehen von Gurtband von der Gurtspule ist nur möglich, wenn das vom Torsionsstab bereitgestellte Widerstandsmoment überwunden wird.

Aus der DE-A-2 026 277 ist ein Kraftbegrenzer für einen Sicherheitsgurt bekannt, der eine Hülse aufweist, die in einem Rahmen gelagert ist. Es ist ein Torsionsstab vorgesehen, der an einer Seite drehfest mit der Hülse verbunden ist und an der anderen Seite drehfest mit einem Flansch. Der Flansch ist wiederum drehfest am Rahmen befestigt. Wenn auf das auf der Hülse aufgenomene Gurtband ausreichend hohe Zugkräfte wirken, kann sich die Hülse entgegen dem Widerstandsmoment des Torsionsstabes drehen, so daß ein Teil des Gurtbandes abgezogen werden kann.

Aufgabe der Erfindung ist es, einen Gurtaufroller zu schaffen, der eine Begrenzung der in dem Sicherheitsgurt maximal wirkenden Kraft ermöglicht und dabei eine besonders kompakte Gestalt aufweist.

Diese Aufgabe wird gelöst durch einen Gurtaufroller für einen Fahrzeug-Sicherheitsgurt, mit einer in einem Gehäuse drehbar gelagerten Gurtspule, an deren beiden axialen Enden Sperrverzahnungen angeordnet sind, und einer lasttragenden Sperrklinke, welche zum Blockieren der Gurtspule in die Sperrverzahnungen einsteuerbar ist, wobei die Sperrverzahnungen am Außenumfang von mit der Gurtspule koaxialen Sperrscheiben gebildet sind, wobei im Kraftflußweg zwischen der Gurtspule und den Sperrscheiben Energieaufnahmemittel angeordnet sind, die bei hoher Belastung wie bei einem Fahrzeugunfall eine Verdrehung der Gurtspule relativ zu den Sperrscheiben in der Gurtband-Abwickelrichtung ermöglichen, und wobei die Energieaufnahmemittel einen koaxial mit der Gurtspule und innerhalb dieser angeordneten Torsionsstab enthalten, der an einem axialen Ende drehfest mit einer der Sperrscheiben und an seinem anderen axialen Ende drehfest mit der Gurtspule verbunden ist. Auf diese Weise wird mittels der Energieaufnahmemittel bei hoher Gurtbandkraft kontrolliert weiteres Gurtband von der Gurtspule freigegeben, so daß die maximal in dem Gurtband wirkende Kraft begrenzt werden kann. Durch die Anordnung der Energieaufnahmemittel im Kraftfluß zwischen den Sperrscheiben und der Gurtspule wird eine besonders kompakte Bauform erzielt.

Weitere vorteilhafte Ausgestaltungen des erfindungsgemäßen Gurtaufrollers sind in den Unteransprüchen angegeben.

Die Erfindung wird nachfolgend unter Bezugnahme auf die beigefügte Zeichnung beschrieben. In dieser zeigen:
- Figur 1 einen schematischen Querschnitt durch einen Gurtaufroller gemäß einer ersten Ausführungsform , die nicht zur Erfindung gehört, sondern nur zur Erläuterung dient;
- Figur 2 eine schematische Seitenansicht des Gurtaufrollers von Figur 1;
- Figur 3 einen schematischen Querschnitt durch die Gurtspule eines Gurtaufrollers gemäß einer zweiten Ausführungsform, die nicht zur Erfindung gehört, sondern nur der Erläuterung dient;
- die Figuren 4a und 4b in einer Stirn- bzw. einer Seitenansicht den bei dem Gurtaufroller von Figur 3 verwendeten Torsionsstab;
- Figur 5 die Kennlinie von Gurtbandkraft über freigegebener Gurtbandlänge bei dem Gurtaufroller gemäß der zweiten Ausführungsform;
- die Figuren 6a und 6b in einer Stirn- bzw. einer Seitenansicht eine weitere Ausführungsform eines Torsionsstabes, wie er bei dem Gurtaufroller gemäß der ersten Ausführungsform verwendet werden kann;
- die Figuren 7a und 7b eine weitere Ausführungsform eines Torsionsstabes entsprechend demjenigen der Figuren 6a und 6b;
- die Figuren 8a und 8b eine weitere Ausführungsform eines Torsionsstabes entsprechend demjenigen der Figuren 6a und 6b;
- Figur 9 die Kennlinie von Gurtbandkraft über freigegebener Gurtbandlänge für einen erfindungsgemäßen Gurtaufroller mit dem Torsionsstab der Figuren 6a und 6b;
- Figur 10 eine perspektivische Explosionsansicht einer Gurtspule mit Sperrscheiben und Torsionsstab gemäß einer dritten, erfindungsgemäßen Ausführungsform ;
- Figur 11 einen Querschnitt durch die Gurtspule von Figur 10; und
- Figur 12 einen Längsschnitt durch die Gurtspule von Figur 10.

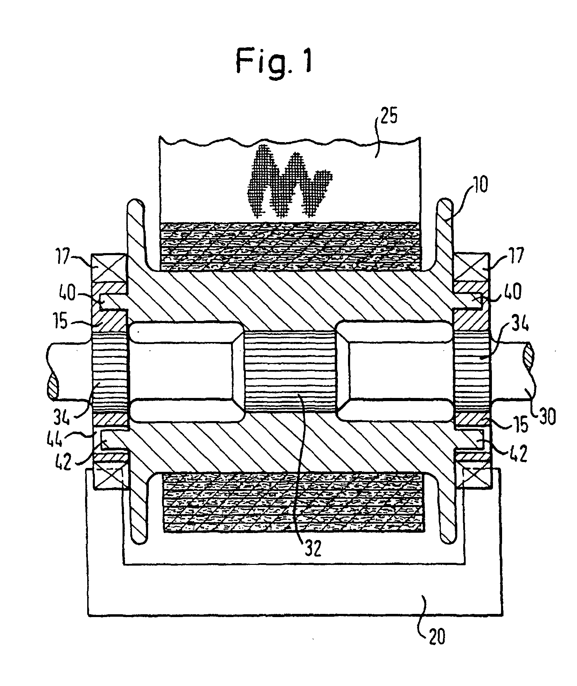

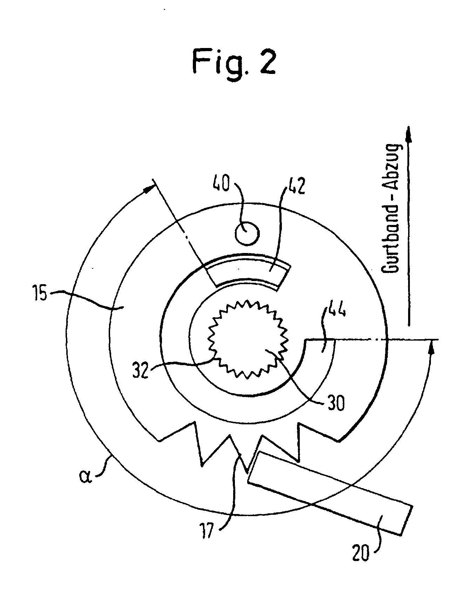

In den Figuren 1 und 2 ist ein Gurtaufroller gemäß einer ersten Ausführungsform dargestellt, die nicht zur Erfindung gehört, sondern nur der Erläuterung dient. Dieser besteht aus einem (nicht dargestellten) Gehäuse, in dem eine Gurtspule 10 drehbar gelagert ist, auf der das schematisch dargestellte Gurtband 25 aufgewickelt ist. An den axialen Enden der Gurtspule 10 sind Sperrscheiben 15 angeordnet, die koaxial mit der Gurtspule 10 sind und auf ihrem Außenumfang eine Sperrverzahnung 17 aufweisen, in die eine Sperrklinke 20 eingesteuert werden kann. Das Einsteuern der Sperrklinke 20 in die Sperrverzahnungen 17 kann in bekannter Weise entweder fahrzeug- oder gurtbandsensitiv erfolgen, um im Bedarfsfall die Gurtspule 10 zu blockieren, so daß im wesentlichen kein weiterer Abzug des auf der Gurtspule 10 angeordneten Gurtbandes 25 mehr möglich ist.

Koaxial mit der Gurtspule 10 und in deren Inneren ist ein Torsionsstab 30 angeordnet. Dieser Torsionsstab ist an seinen axialen Enden jeweils mit einer Kerbverzahnung 34 versehen, die drehfest mit einer angrenzenden Sperrscheibe 15 verbunden ist. Mittig zwischen den Kerbverzahnungen 34 ist der Torsionsstab mit einer Kerbverzahnung 32 versehen, die drehfest mit der Gurtspule 10 verbunden ist.

Die Gurtspule ist an jedem Ende weiterhin mit einem Scherstift 40 versehen, der in eine entsprechende Öffnung in jeder Sperrscheibe 15 eingreift. Ferner weist die Gurtspule 10 an jedem Ende einen Vorsprung 42 auf, der in einen Schlitz 44 eingreift, der die Gestalt eines auf die Längsachse der Gurtspule 10 zentrierten Kreisbogens hat und sich über einen Winkelbereich von α plus dem von dem Vorsprung 42 eingenommenen Winkelbereich erstreckt. Dies ist insbesondere in Figur 2 zu sehen.

Die Funktion des Gurtaufrollers ist die folgende: durch eine fahrzeug- oder gurtbandsensitive Auslösung eines (nicht dargestellten) Sperrmechanismus wird die Sperrklinke 20 in die Sperrverzahnungen 17 eingeschwenkt. Dadurch sind die Sperrscheiben 15 gegen eine weitere Drehung in der Gurtband-Abwickelrichtung blockiert. Während eines ersten Abschnitts der von dem Gurtband auf die Gurtspule 10 ausgeübten Belastung ist über die Scherstifte 40 auch die Gurtspule 10 gegen eine Drehung in der Gurtband-Abwickelrichtung blockiert. Erreicht die auf die Gurtspule 10 ausgeübte Belastung einen von der Dimensionierung der Scherstifte 40 abhängigen Schwellenwert, werden diese abgeschert, so daß die Gurtspule relativ zu den Sperrscheiben unter Verwindung des Torsionsstabes 30 in der Gurtband-Abwickelrichtung verdreht werden kann. Durch diese Drehung wird eine zusätzliche Gurtbandlänge freigegeben. Im Ergebnis erfolgt eine Begrenzung der in dem Gurtband wirkenden Kraft und folglich der auf den Fahrzeuginsassen einwirkenden Belastung.

Die Kennlinie von Gurtbandkraft über abgezogener Gurtbandlänge kann durch die Auswahl einiger Parameter des Torsionsstabes 30 in besonders einfacher Weise an die jeweiligen Gegebenheiten des Fahrzeugtyps angepaßt werden, in dem der Gurtaufroller eingesetzt wird. Die möglichen Parameter für eine Beeinflussung der Kennlinie sind die folgenden: Vorspannung des Torsionsstabes in der Ruhestellung, Material des Torsionsstabes, Verhältnis von elastischer zu plastischer Verformung bei maximaler Verdrehung, Querschnittsverlauf des Torsionsstabes, etc. Durch den Eingriff des Vorsprunges 42 in den Schlitz 44 ist die maximal mögliche Verdrehung der Gurtspule 10 relativ zu den Sperrscheiben 15 auf den Winkelbereich α begrenzt.

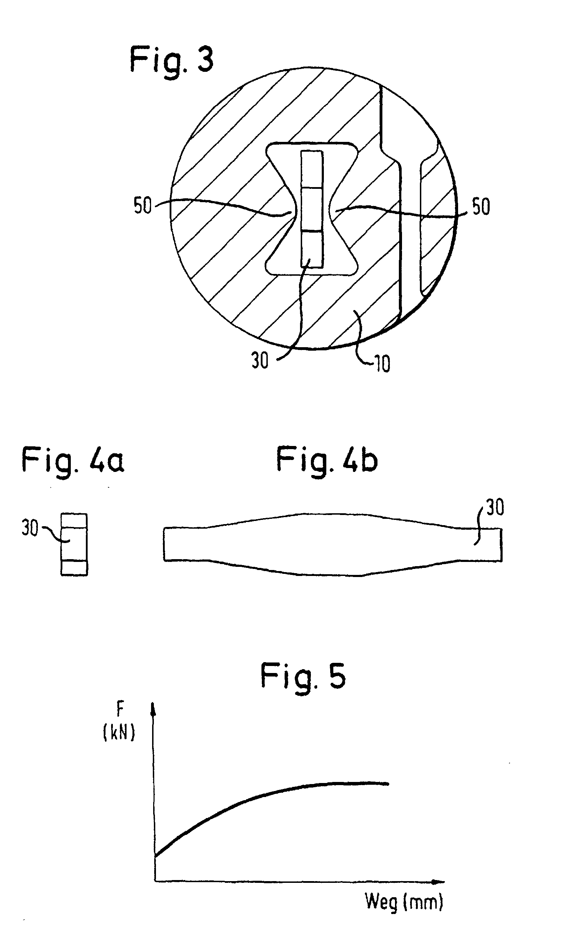

In Figur 3 ist ein Querschnitt durch die Gurtspule eines Gurtaufrollers gemäß einer zweiten Ausführungsform dargestellt, die nicht zur Erfindung gehört, sondern nur der Erläuterung dient. Die Gurtspule 10 ist im Inneren mit zwei einander gegenüberliegenden Vorsprüngen 50 versehen, welche ab einer bestimmten Verdrehung der Gurtspule 10 relativ zum Torsionsstab 30 an diesem in Anlage gelangen und so eine weitere Verdrehung begrenzen. Der bei dieser Ausführungsform verwendete Torsionsstab 30 ist in den Figuren 4a und 4b dargestellt. Er weist einen rechteckigen Querschnitt mit konstanter Dicke auf, wobei die Breite des Torsionsstabes 30 von einem Minimalwert an jedem axialen Ende, also im Bereich der Verbindung mit den Sperrscheiben 15, bis auf einen Maximalwert in der Mitte des Torsionsstabes 30, also im Bereich der Verbindung mit der Gurtspule 10, anwächst. Die mit dem Gurtaufroller gemäß der zweiten Ausführungsform erzielbare Kennlinie von Gurtbandkraft über freigegebener Gurtbandlänge ist in Figur 5 dargestellt. Bedingt durch eine Vorspannung des Torsionsstabes mit einem Drehmoment, welches vorzugsweise dem zum Abscheren notwendigen Drehmoment entspricht, ergibt sich ausgehend von einem von Null verschiedenen Anfangswert der Gurtbandkraft bei fortschreitendem Gurtbandauszug eine degressiv ansteigende Gurtbandkraft.

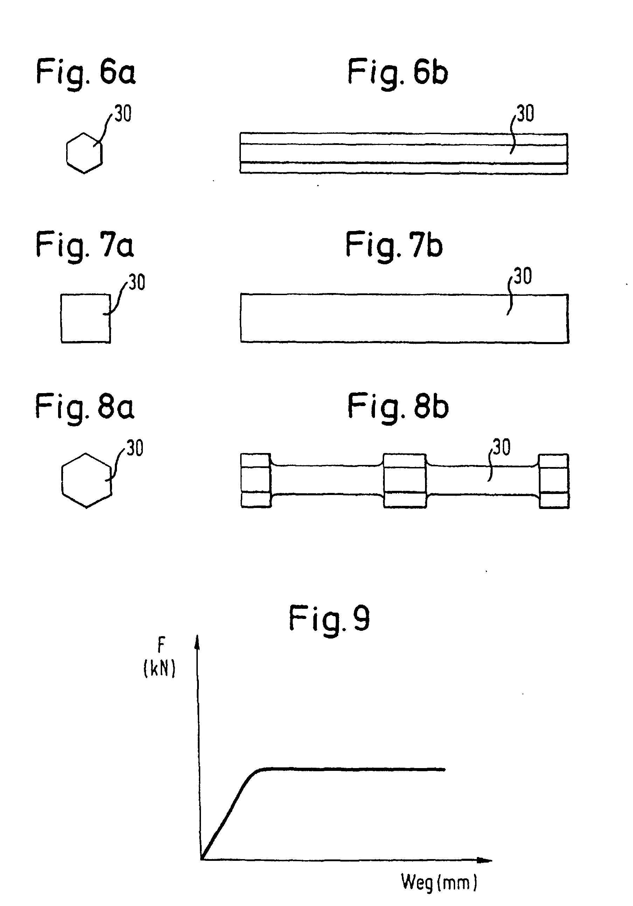

In den Figuren 6a, 6b sowie 7a, 7b sind weitere Ausführungsformen von Torsionstäben 30 dargestellt, die bei dem Gurtaufroller gemäß der ersten Ausführungsform verwendet werden können. Die dargestellten Torsionsstäbe 30 weisen durchgehend den gleichen Querschnitt auf, und zwar einen sechseckigen Querschnitt im Falle des Torsionsstabes 30 aus den Figuren 6a und 6b und einen quadratischen Querschnitt im Falle des Torsionsstabes 30 aus den Figuren 7a und 7b. Bei den in diesen Figuren gezeigten Torsionsstäben 30 kann auf die Kerbverzahnungen 32, 34 (Figuren 1 und 2) verzichtet werden, da die Torsionsstäbe 30 direkt in an deren Querschnitt angepaßte Aufnahmen in den Sperrscheiben 15 bzw. der Gurtspule 10 eingesetzt werden können.

In den Figuren 8a und 8b ist eine weitere Ausführungsform eines Torsionsstabes 30 dargestellt, der in dem Gurtaufroller gemäß der ersten Ausführungsform verwendet werden kann. Der Unterschied zu dem in Figur 1 dargestellten Torsionsstab 30 besteht darin, daß anstelle der Kerverzahnungen 32, 34 ein Sechskantprofil verwendet wird.

In Figur 9 ist eine Kennlinie von Gurtbandkraft über freigegebener Gurtbandlänge dargestellt, wie sie mit dem Torsionsstab von Figur 6 erzielt wird. Diese Kennlinie, bei der im Gegensatz zur Kennlinie von Figur 5 der Anfangswert der Gurtbandkraft gleich Null ist, weist einen ersten Abschnitt mit im Vergleich zur Kennlinie von Figur 5 steilerem Anstieg und einen zweiten Abschnitt auf, in dem die Gurtbandkraft im wesentlichen konstant bleibt. Somit wird auch ohne eine Vorspannung des Torsionsstabes 30 bei fortschreitendem Gurtbandauszug schnell eine ausreichende Gurtbandkraft erreicht.

Die Vorteile der beschriebenen Gestalt des Gurtaufrollers sind die folgenden: Durch die Verwendung des innerhalb der Gurtspule angeordneten Torsionsstabes wird die Kraftbegrenzungsfunktion des Gurtaufrollers bei einer sehr kompakten Gestalt des Gurtaufrollers erhalten, dessen Abmessungen mit denen eines herkömmlichen Gurtaufrollers im wesentlichen identisch sind. Dadurch können herkömmliche Gurtaufroller ohne Kraftbegrenzung durch erfindungsgemäße Gurtaufroller ersetzt werden, ohne daß konstruktive Änderungen am Fahrzeug notwendig sind. Separate Kraftbegrenzungsvorrichtungen entfallen. Da der Torsionsstab mittig zwischen den beiden Sperrscheiben mit der Gurtspule 10 verbunden ist, verteilen sich die bei einer Verdrehung des Torsionsstabes auftretenden Längenänderungen des Torsionsstabes in symmetrischer Weise auf die beiden Seiten des Gurtaufrollers; die beiden Sperrscheiben werden symmetrisch belastet. Der Durchmesser des Drehstabes kann vergleichsweise gering ausgeführt sein, da die Gesamtbelastung der Gurtspule auf die beiden Seiten des Torsionsstabes verteilt wird. Durch die Gestaltung des Torsionsstabes kann der gewünschte Verlauf der Kennlinie von Gurtbandkraft über ausgezogener Gurtbandlänge eingestellt werden.

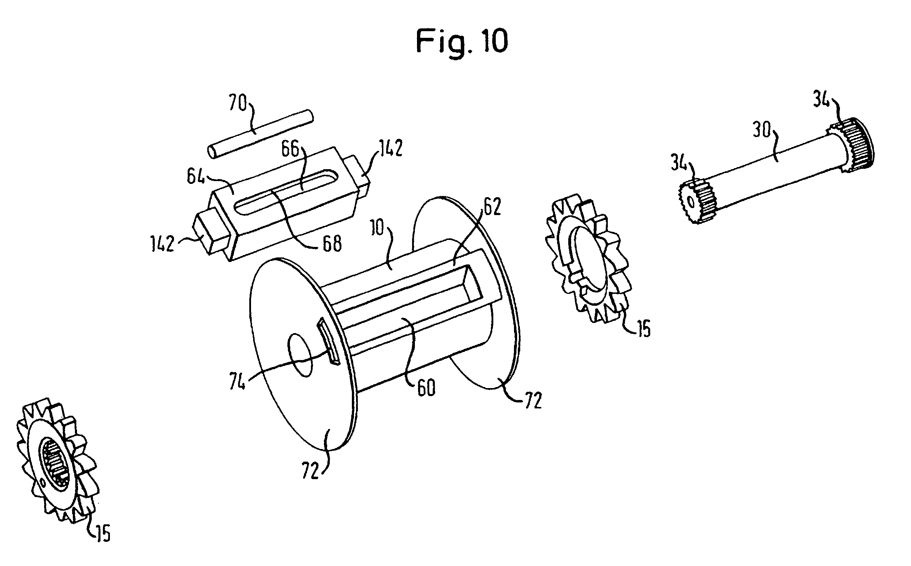

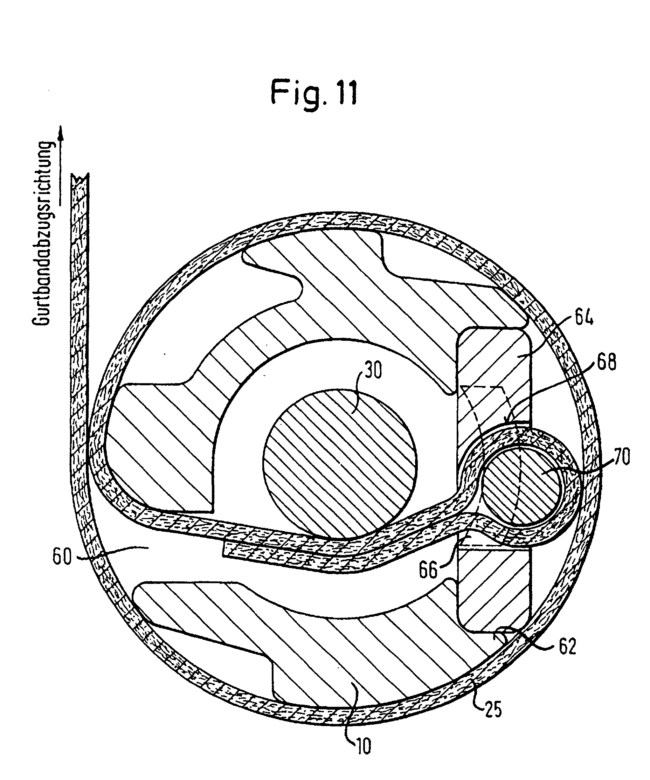

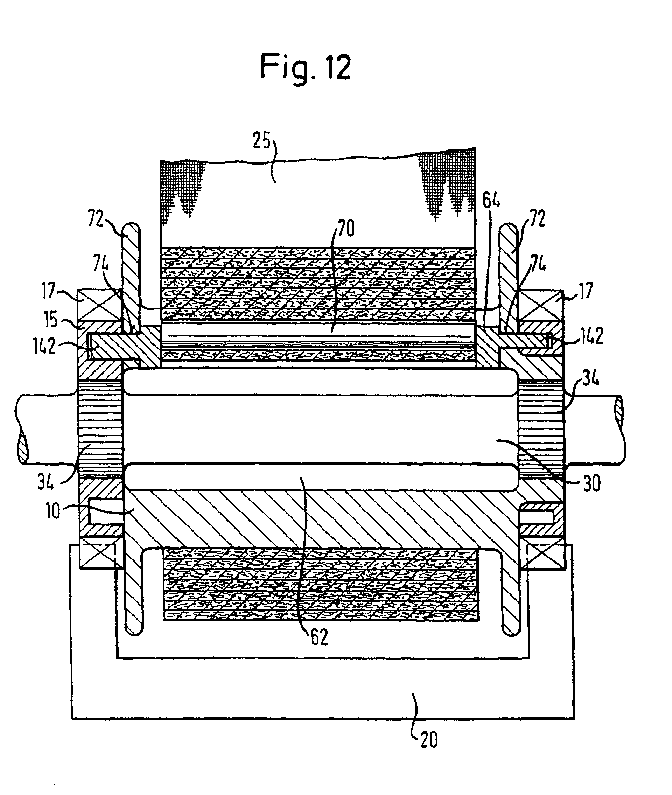

In den Figuren 10 bis 12 ist ein Gurtaufroller gemäß einer dritten, erfindungsgemäßen Ausführungsform dargestellt. Hinsichtlich der aus den vorangegangenen Figuren bekannten Bauelemente wird auf die entsprechenden Erläuterungen verwiesen.

Im Gegensatz zur ersten Ausführungsform ist der Torsionsstab 30 mit der Gurtspule 10 nicht mittig, sondern an einem seiner axialen Enden verbunden. Das andere axiale Ende ist mit der an dem entsprechenden axialen Ende der Gurtspule 10 angeordneten Sperrscheibe 15 verbunden. Im Ruhezustand sind beide Sperrscheiben 15 über die (in den Figuren 10 bis 12 nicht dargestellten) Scherstifte 40 mit der Gurtspule 10 verbunden. Beim Überschreiten einer vorbestimmten Belastung der Sperrscheiben 15 werden die Scherstifte abgeschert, und die Gurtspule 10 kann sich relativ zu den Sperrscheiben drehen, wobei dieser Drehung durch den Torsionsstab 30 entgegengewirkt wird. Der Torsionsstab 30 ist vorzugsweise so vorgespannt, daß das zum Abscheren der Scherstifte 40 notwendige Drehmoment auf die Gurtspule 10 etwa gleich dem Drehmoment ist, das der Torsionsstab 30 auf die mit ihm verbundene Sperrscheibe ausübt. Die nicht mit dem Torsionsstab verbundene Sperrscheibe kann sich nach dem Abscheren des entsprechenden Scherstifts relativ zur Gurtspule 10 frei drehen.

Ein weiterer Unterschied zur ersten Ausführungsform besteht darin, daß die Gurtspule 10 mit einem achsparallelen, durchgehenden Schlitz 60 zur Gurtbandbefestigung versehen ist. Dieser Schlitz 60 durchquert die Gurtspule mittig im Gegensatz zu exzentrisch wie im Fall der ersten Ausführungsform und ist beidseitig zur Mantelfläche der Gurtspule 10 geöffnet, auf die das Gurtband 25 aufgewickelt wird. An einer Seite des Schlitzes 60 ist eine Erweiterung 62 vorgesehen, in der eine Halteplatte 64 angeordnet ist. Diese Halteplatte 64 hat einen allgemein rechteckigen Querschnitt, besteht aus Stahl und ist mit einer Öffnung 66 versehen. An der außenliegenden Seite der Öffnung 66 ist eine Aufnahme 68 gebildet, in der ein Haltestift 70 zu liegen kommt, der in eine Schlaufe am dem Gurtaufroller zugeordneten Ende des Gurtbandes 25 eingesteckt ist. Ausgehend von der Halteplatte 64 verläuft das Gurtband 25 nach innen durch die Gurtspule 10, so daß es über den Haltestift 70 und die Halteplatte 64 an der Gurtspule 10 festgelegt ist. Die Halteplatte 64 steht mit dem Haltestift 70 nicht über die Mantelfläche der Gurtspule 10 nach außen hervor, so daß das Aufwickeln des Gurtbandes 25 auf die Gurtspule 10 nicht gestört ist. Bei dieser Gestaltung ergibt sich eine besonders einfache Montage.

Die in gleicher Weise wie bei den vorangegangenen Ausführungsformen an jedem axialen Ende der Gurtspule 10 vorgesehene, radial über die Mantelfläche hinausragende Anlaufscheibe, hier mit dem Bezugszeichen 72 versehen, ist jeweils mit einem Durchbruch 74 versehen, in den das entsprechende axiale Ende der Halteplatte 64 eingreift. Jedes axiale Ende der Halteplatte 64 ist mit einem Fortsatz 142 versehen, der die gleiche Gestalt und die gleiche Funktion wie der Vorsprung 42 hat, der im Zusammenhang mit der ersten Ausführungsform erläutert wurde.

Die Halteplatte 64 hat insbesondere die Aufgabe, die Festigkeit der Gurtspule zu erhöhen. Aufgrund der Krafteinleitung vom Gurtband 25 in die Gurtspule 10 ist die Halteplatte vergleichsweise hohen Belastungen ausgesetzt. Die Gurtspule 10 ist im Vergleich dazu insgesamt niedrigeren Belastungen ausgesetzt. Für die Halteplatte wird daher ein Werkstoff verwendet, der eine vergleichsweise hohe Festigkeit hat, beispielsweise Stahl. Durch die gleichmäßigere Krafteinleitung über die Halteplatte 64 in die Gurtspule 10 kommt es zu insgesamt geringeren Belastungen der beispielsweise aus einer Aluminium-Legierung bestehenden Gurtspule 10, die daher mit einem kleineren Durchmesser ausgeführt werden kann, so daß eine größere Gurtbandlänge aufgewickelt werden kann. Die Verminderung der Belastung der Gurtspule 10 macht sich bei allen Gurtbandabzugsrichtungen relativ zur Halteplatte 64 bemerkbar. Ein zusätzlicher Vorteil der Halteplatte besteht darin, daß auch die unter Umständen hoch belasteten, als Anschlag dienenden Vorsprünge 42 aus einem hoch belastbaren Werkstoff gebildet sind.

Bei einer nicht dargestellten Weiterentwicklung des erfindungsgemäßen Gurtaufrollers ist ein Anschluß der Gurtspule 10 an einen Gurtstraffer in einfacher Weise dadurch möglich, daß der Torsionsstab 30 auf einer Seite verlängert ausgebildet und mit der Ausgangsseite eines Gurtstrafferantriebs gekoppelt wird. Ferner kann bei der Verwendung des erfindungsgemäßen Gurtaufrollers in Kombination mit einem Gassack-Rückhaltesystem auf eine Begrenzung des Verdrehwinkels der Gurtspule 10 relativ zu den Sperrscheiben 15 verzichtet werden, da der Gurtbandabzug von der Gurtspule 10 durch das Eintauchen des Insassen in den Gassack begrenzt ist.

## Patentansprüche

1. Gurtaufroller für einen Fahrzeug-Sicherheitsgurt, mit einer in einem Gehäuse drehbar gelagerten Gurtspule (10), an deren beiden axialen Enden Sperrverzahnungen (17) angeordnet sind, und einer lasttragenden Sperrklinke (20), welche zum Blockieren der Gurtspule in die Sperrverzahnungen einsteuerbar ist, wobei die Sperrverzahnungen am Außenumfang von mit der Gurtspule koaxialen Sperrscheiben (15) gebildet sind, wobei im Kraftflußweg zwischen der Gurtspule und den Sperrscheiben Energieaufnahmemittel (30) angeordnet sind, die bei hoher Belastung wie bei einem Fahrzeugunfall eine Verdrehung der Gurtspule relativ zu den Sperrscheiben in der Gurtband-Abwickelrichtung ermöglichen, und wobei die Energieaufnahmemittel einen koaxial mit der Gurtspule (10) und innerhalb dieser angeordneten Torsionsstab (30) enthalten, der an einem axialen Ende drehfest mit einer der Sperrscheiben (15) und an seinem anderen axialen Ende drehfest mit der Gurtspule (10) verbunden ist.

2. Gurtaufroller nach Anspruch 1, **dadurch gekennzeichnet, daß** der Torsionsstab (30) so vorgespannt ist, daß er die Gurtspule (10) relativ zu der Sperrscheibe bzw. den Sperrscheiben (15) in der Gurtband-Aufwickelrichtung beaufschlagt.

3. Gurtaufroller nach einem der Ansprüche 1 und 2, **dadurch gekennzeichnet, daß** der Torsionsstab (30) einen rechteckigen Querschnitt aufweist und im Inneren der Gurtspule (10) Vorsprünge angeordnet sind, welche ab einem vorbestimmten Verdrehwinkel der Gurtspule (10) relativ zum Torsionsstab (30) an diesem in Anlage gelangen und so eine weitere Verdrehung begrenzen.

4. Gurtaufroller nach einem der vorhergehenden Ansprüche, **dadurch gekennzeichnet, daß** die Gurtspule (10) mit einem achsparallelen durchgehenden, beidseitig zur Mantelfläche der Gurtspule (10) geöffneten Schlitz (60) zur Gurtbandbefestigung versehen ist und daß an einem Ende des Schlitzes eine Halteplatte (64) angeordnet ist, die mit einer Öffnung (66) zur Gurtbandbefestigung versehen ist.

5. Gurtaufroller nach Anspruch 4, **dadurch gekennzeichnet, daß** die Halteplatte (64) nicht über die Mantelfläche der Gurtspule (10) nach außen hinausragt.

6. Gurtaufroller nach einem der Ansprüche 4 und 5, **dadurch gekennzeichnet, daß** die Halteplatte (64) auf ihrer außenliegenden Seite mit einer Aufnahme (68) für einen Gurtband-Haltestift (70) versehen ist.

7. Gurtaufroller nach einem der Ansprüche 4 bis 6, **dadurch gekennzeichnet, daß** die Gurtspule (10) an ihren axialen Enden mit jeweils einer Anlaufscheibe (72) versehen ist und daß in jeder Anlaufscheibe ein Durchbruch (74) vorgesehen ist, in den jeweils ein Ende der Halteplatte (64) eingreift.

8. Gurtaufroller nach Anspruch 7, **dadurch gekennzeichnet, daß** die Halteplatte (64) an ihren axialen Enden mit jeweils einem Fortsatz (142) versehen ist, der auf der Außenseite jeder Anlaufscheibe (72) axial hervorsteht.

9. Gurtaufroller nach einem der Ansprüche 4 bis 8, **dadurch gekennzeichnet, daß** die Halteplatte (64) aus Stahl besteht.

10. Gurtaufroller nach einem der vorhergehenden Ansprüche, **dadurch gekennzeichnet, daß** an jedem axialen Ende der Gurtspule (10) ein Scherstift (40) vorgesehen ist, der in eine Bohrung der benachbarten Sperrscheibe (15) eingreift und bei hoher Belastung abgeschert wird.

11. Gurtaufroller nach einem der vorhergehenden Ansprüche, **dadurch gekennzeichnet, daß** jede Sperrscheibe (15) mit einem Schlitz (44) versehen ist, der die Gestalt eines auf die Längsachse der Gurtspule zentrierten Kreisbogens hat, und daß an jedem axialen Ende der Gurtspule ein, Vorsprung (42) vorgesehen ist, der in den Schlitz eingreift und eine Verdrehung der Gurtspule (10) relativ zu den Sperrscheiben (15) begrenzt.

12. Gurtaufroller nach Anspruch 4, 8 und 11, **dadurch gekennzeichnet, daß** die Vorsprünge (42) an den axialen Enden der Gurtspule (10) durch die Fortsätze (142) der Halteplatte (64) gebildet sind.

## Claims

1. A belt retractor for a vehicle safety belt, comprising a belt drum (10), which is rotatably mounted in a housing and has ratchet tooth means (17) arranged at its two axial ends, and a load bearing ratchet pawl (20), adapted to be moved into engagement with the ratchet tooth means for locking the belt drum, the ratchet tooth means being formed on the outer periphery of ratchet disks (15) coaxial to the belt drum, energy take-up means (30) being arranged in the force flow path between the belt drum and the ratchet disks, said energy take-up means allowing rotation of the belt drum in relation to the ratchet disks in the belt webbing pay-off direction under heavy strain such as a vehicle collision, and the energy take-up means including a torsion rod (30) arranged within, and coaxially to, the belt drum (10), said torsion rod being connected at one axial end with one of the ratchet disks (15) in a manner so as to prevent relative rotation and being connected at its other axial end with the belt drum (10) in a manner so as to prevent relative rotation.

2. The belt retractor as claimed in claim 1, **characterized in that** the torsion rod (30) is pretensioned such that it urges the belt drum (10) in relation to the ratchet disk or disks (15) in the belt webbing take-up direction.

3. The belt retractor as claimed in either one of claims 1 and 2, **characterized in that** the torsion rod (30) has a rectangular cross-section and **in that** projections are arranged in the interior of the belt drum (10), said projections, as from a predetermined angle of rotation of the belt drum (10) in relation to the torsion rod (30), coming into engagement with the torsion rod (30) and hence limiting further rotation.

4. The belt retractor as claimed in any one of the preceding claims, **characterized in that** the belt drum (10) is provided with a slot (60) for attachment of belt webbing, said slot (60) being parallel to the axis of the belt drum and extending through the belt drum and furthermore being open on either side to the peripheral surface of the belt drum (10), and **in that** a holding plate (64) is arranged at one end of the slot, said holding plate being provided with an opening (66) for the attachment of the belt webbing.

5. The belt retractor as claimed in claim 4, **characterized in that** the holding plate (64) does not protrude past the peripheral surface of the belt drum (10) to the outside.

6. The belt retractor as claimed in either one of claims 4 and 5, **characterized in that** the holding plate (64) is provided with a recess (68) at its exterior side for a belt webbing holding pin (70).

7. The belt retractor as claimed in any one of claims 4 to 6, **characterized in that** the belt drum (10) is provided with a respective stop disk (72) at each of its axial ends, and **in that** an aperture (74) is provided in each stop disk, into which a respective end of the holding plate (64) fits.

8. The belt retractor as claimed in claim 7, **characterized in that** the holding plate (64) is provided with a nose (142) at each of its axial ends, said nose projecting axially from the outer side of each stop disk (72).

9. The belt retractor as claimed in any one of claims 4 to 8, **characterized in that** the holding plate (64) is manufactured of steel.

10. The belt retractor as claimed in any one of the preceding claims, **characterized in that** a shear pin (40) is provided on each axial end of the belt drum (10), said shear pin fitting into a hole in the adjacent ratchet disk (15) and being adapted to shear under high load.

11. The belt retractor as claimed in any one of the preceding claims, **characterized in that** each ratchet disk (15) is provided with a slot (44), which has the shape of a circular arc centered on the longitudinal axis of the belt drum, and **in that** at each axial end of the belt drum a projection (42) is provided, fitting into the slot and limiting a rotation of the belt drum (10) in relation to the ratchet disks (15).

12. The belt retractor as claimed in claims 4, 8 and 11, **characterized in that** the projections (42) at the axial ends of the belt drum (10) are formed by the noses (142) of the holding plate (64).

## Revendications

1. Enrouleur pour une ceinture de sécurité de véhicule, comprenant une bobine de ceinture (10) montée de façon rotative dans un boîtier, aux deux extrémités axiales de laquelle sont agencées des dentures de blocage (17), et un cliquet de blocage (20) portant charge, qui peut être engagé dans les dentures de blocage pour commander le blocage de la bobine de la ceinture, les dentures de blocage étant formées sur le pourtour extérieur de disques de blocage (15) coaxiaux par rapport à la bobine de ceinture, et des moyens (30) d'absorption d'énergie étant agencés dans le trajet du flux des forces entre la bobine de ceinture et les disques de blocage, lesdits moyens d'absorption d'énergie permettant, en cas de charge élevée comme dans le cas d'un accident, une rotation de la bobine de ceinture par rapport aux disques de blocage dans le sens de déroulement de la sangle de la ceinture, et les moyens d'absorption d'énergie contenant une barre de torsion (30) agencée coaxialement à la bobine de ceinture (10) et à l'intérieur de celle-ci, ladite barre de torsion étant reliée, à une de ses extrémités axiales, de façon solidaire en rotation avec un des disques de blocage (15) et à son autre extrémité axiale, de façon solidaire en rotation avec la bobine de ceinture (10).

2. Enrouleur de ceinture selon la revendication 1, **caractérisé en ce que** la barre de torsion (30) est précontrainte d'une façon telle qu'elle sollicite la bobine de ceinture (10) par rapport au disque de blocage ou aux disques de blocage (15) dans le sens d'enroulement de la sangle de ceinture.

3. Enrouleur de ceinture selon l'une des revendications 1 et 2, **caractérisé en ce que** la barre de torsion (10) présente une section transversale rectangulaire et **en ce qu'**à l'intérieur de la bobine de ceinture (10) sont disposées des saillies qui, à partir d'un angle de rotation prédéterminé de la bobine de ceinture (10) par rapport à la barre de torsion (30), parviennent en appui sur celle-ci et limitent ainsi une poursuite de la rotation.

4. Enrouleur de ceinture selon l'une des revendications précédentes, **caractérisé en ce que** la bobine de ceinture (10) est pourvue d'une fente (60) servant à la fixer la sangle de ceinture, qui va de bout en bout parallèlement à l'axe et est ouverte des deux côtés vers la surface enveloppe de la bobine de ceinture (10), et **en ce qu'**à une extrémité de la fente est agencée une plaque de retenue (64) qui est pourvue d'une ouverture (66) servant à fixer la sangle de ceinture.

5. Enrouleur de ceinture selon la revendication 4, **caractérisé en ce que** la plaque de retenue ne dépasse pas vers l'extérieur au-delà de la surface enveloppe de la bobine de ceinture (10).

6. Enrouleur de ceinture selon l'une des revendications 4 et 5, **caractérisé en ce que** la plaque de retenue (64) est pourvue, sur son côté situé à l'extérieur, d'un logement (68) pour une tige de retenue (70) de la sangle de ceinture.

7. Enrouleur de ceinture selon l'une des revendications 4 à 6, **caractérisé en ce que** la bobine de ceinture (10) est pourvue à chacune de ses extrémités axiales d'un disque de démarrage (72) et **en ce que** dans chaque disque de démarrage est prévu un ajour (74) dans lequel s'engage respectivement une extrémité de la plaque de retenue (64).

8. Enrouleur de ceinture selon la revendication 7, **caractérisé en ce que** la plaque de retenue (64) est pourvue à chacune de ses extrémités axiales d'un appendice (142) qui fait saillie axialement sur la face extérieure de chaque disque de démarrage (72).

9. Enrouleur de ceinture selon l'une des revendications 4 à 8, **caractérisé en ce que** la plaque de retenue (64) est en acier.

10. Enrouleur de ceinture selon l'une des revendications précédentes, **caractérisé en ce qu'**à chaque extrémité axiale de la bobine de ceinture (10) est prévu un goujon de cisaillement (40) qui s'engage dans un alésage du disque de blocage (15) voisin et qui est cisaillé en cas de charge élevée.

11. Enrouleur de ceinture selon l'une des revendications précédentes, **caractérisé en ce que** chaque disque de blocage (14) est pourvu d'une fente (44) qui a la forme d'un arc de cercle centré sur l'axe longitudinal de la bobine de ceinture, et **en ce qu'**à chaque extrémité axiale de la bobine de ceinture est prévue une saillie (42) qui s'engage dans la fente et limite une rotation de la bobine de ceinture (10) par rapport aux disques de blocage (15).

12. Enrouleur de ceinture selon les revendications 4, 8 et 11, **caractérisé en ce que** les saillies (42), sont formées aux extrémités axiales de la bobine de ceinture (10) par les appendices (142) de la plaque de retenue (64).
